# EUROPEAN PATENT APPLICATION

(11) **EP 4 827 043 A1**
(43) Date of publication of application: **21.10.2026**
(21) Application number: 25171366.5
(22) Date of filing: 17.04.2025
(51) Int. Cl.: H04L 9/30, H04L 9/32

(54) **METHOD FOR VERIFICATION OF UNBALANCED OIL-AND-VINEGAR SIGNATURES**

(71) Applicant: Siemens Aktiengesellschaft, 80333 München (DE)
(72) Inventor: Bauer, Sven, 85591 Vaterstetten (DE); De Santis, Fabrizio, 80634 München (DE)
(74) Representative: Siemens Patent Attorneys

(57) **Abstract**

The present disclosure provides a method for verification of a signature comprising an unbalanced oil-and-vinegar signature. The method includes accepting a compressed public key as a verification key, repeatedly limiting decompression of the compressed public key to a strictly smaller part into an uncompressed part of the key, using the uncompressed part of the key for verifying a part of the verification condition, and continuing until the verification condition is fully verified. The method allows for efficient signature verification while minimizing memory usage by selectively decompressing only necessary portions of the public key during the verification process.

## Description

The invention relates to digital signature verification, and more particularly to a method for efficient verification of unbalanced oil-and-vinegar signatures.

Digital signatures play a crucial role in modern cryptography, providing mechanisms for authentication, integrity, and non-repudiation. As computing power has increased and new attack vectors have emerged, there has been a growing need for more robust signature schemes that can withstand potential threats from quantum computers.

Unbalanced oil-and-vinegar signatures represent a class of multivariate public key cryptosystems that offer potential resistance against quantum attacks. These schemes derive their security from the difficulty of solving systems of multivariate quadratic equations, a problem believed to be hard even for quantum computers.

One challenge with oil-and-vinegar signatures is the size of the public keys, which can be substantially larger than those used in traditional signature schemes like RSA or ECDSA. This presents difficulties for implementation on devices with limited memory or storage capacity. Additionally, the computational requirements for signature verification can be demanding, especially for resource-constrained systems.

Another issue is the trade-off between security and efficiency. Increasing the security parameters of oil-and-vinegar schemes often leads to larger key sizes and slower signature generation and verification times. This can make it challenging to deploy these signatures in applications with strict performance requirements or on devices with limited computational resources.

In particular, the process of expanding compressed public keys during signature verification can consume significant amounts of memory. This expansion step is typically necessary to perform the required calculations, but it can strain the resources of embedded systems or other devices with tight memory constraints.

It has been appreciated that a method is needed that overcomes one or more of these problems.

It is therefore the object of the present invention to provide a method for verification of unbalanced oil-and-vinegar signatures that overcomes one or more of the afore-mentioned problems. In particular, the method according to the invention, should be applicable to devices with limited computational resources.

This object of the present invention is solved with a method for verification of unbalanced oil-and-vinegar signatures with the features contained in claim 1. Advantageous aspects of the invention are contained in the subsequent dependent claims, the following description and the drawing.

In a first aspect, a method for verification of a signature, which comprises an unbalanced oil-and-vinegar signature, is provided. The method includes accepting a compressed public key as a verification key, limiting, at a time, repeatedly decompression of the compressed public key to a strictly smaller part of the compressed public key into an uncompressed part of the key, using the uncompressed part of the key for verifying a part of the verification condition, and continuing until the verification condition is fully verified.

This method allows for efficient verification of unbalanced oil-and-vinegar signatures while significantly reducing memory requirements. By decompressing only parts of the public key as needed, the method enables signature verification on devices with limited RAM, which was previously challenging or impossible with standard implementations due to the exceeding RAM requirements.

In addition, since the threat of quantum computing to traditional cryptographic systems becomes more apparent, the method according to the invention can withstand attacks from quantum computers. Unbalanced oil-and-vinegar signatures, such as MAYO signatures, represent an advantageous approach in the field of post-quantum cryptography.

The method according to the invention is especially designed to be implemented on constrained devices with limited RAM, making it particularly suitable for use in industrial edge devices and other embedded systems where computational resources are costly and rare. By optimizing the verification process for such resource-constrained environments, the method enables the use of robust post-quantum cryptographic techniques in a wider range of applications.

Advantageously, the method according to the invention provides an efficient approach to signature verification and employs techniques to minimize RAM usage during the verification process, allowing for effective implementation on devices with limited memory resources.

The method according to the invention thus offers a practical solution for integrating post-quantum cryptographic techniques into existing and future embedded systems, particularly in industrial settings where security and efficiency are paramount concerns.

In an advantageous aspect of the method according to the invention, the part of the uncompressed part of the key denotes matrices involved in the verification condition. This aspect allows for targeted decompression of specific matrices required for each step of the verification process, further optimizing memory usage and computational efficiency.

In another advantageous aspect of the method according to the invention, the verification condition comprises a set of equations. With the verification condition comprising a set of equations, verifying a part of the verification condition may be performed as verifying parts of the set of equations, such as verifying a subgroup of equations of the set of equations. Thus, verification conditions comprising a set of equations allow to verify each part of the signature with a modular and efficient verification process.

In another advantageous aspect of the method according to the invention, the verification condition comprises two or more separately verifiable subconditions. This aspect of the invention enables parallel or sequential verification of different parts of the signature and thus adapting to the resource limits of devices carrying out this method. In particular and advantageously, a device conducting the method according to this aspect of the invention, only needs be able to verify the individual sub-conditions.

In another advantageous aspect of the method according to the invention, the subconditions are or comprise equations. Representing subconditions as equations provides separately verifyable subconditions, which together may represent the full verification condition, such as a set of equations or involving a set of equations as described above.

In another advantageous aspect of the method according to the invention, the oil-and-vinegar signature is a MAYO signature. This aspect of the invention advantageously and specifically addresses the implementation of the method for MAYO signatures, which are regarded as a promising candidate for future post-quantum signature schemes. Thus, the method may be directly applicable to cutting-edge cryptographic protocols.

In another advantageous aspect of the method according to the invention, the method is computer-implemented.

In a further advantageous aspect of the method according to the invention, the method is carried out with a device, particularly with an industrial edge device. This aspect highlights the method's suitability for use in industrial settings, particularly on edge devices with limited computational resources, enabling the use also of edge devices and legacy devices to apply and benefit from post-quantum cryptography in industrial environments.

In a further aspect of the invention, a computer-program product is provided, which is configured to carry out a method according to one of the previous aspects. In particular, the computer-program product comprises code, that - when executed - carries out the method according to the invention.

In a third aspect, a device, particularly a performance limited device and/or an industrial edge device, is provided that is configured to carry out the method according to one of the previous aspects and/or which comprises a computer-program product according to the previous aspect.

This third aspect provides a hardware implementation of the method according to the invention, that is specifically tailored for industrial edge devices, enabling secure and efficient signature verification in industrial Internet of Things (lloT) and other edge computing scenarios.

In the following, embodiments of the method according to the invention will be described, by way of example, with reference to the following drawings, in which:
- Fig. 1: illustrates a flowchart for a conventional method for signature verification in the form of a pseudo source code,
- Fig. 2: depicts an algorithm for expanding a compact public key as used in the conventional method depicted in Fig.1 in the form of a pseudo source code,
- Fig. 3: shows a method for MAYO signature verification according to an embodiment of the present invention in the form of a pseudo source code and
- Fig. 4: illustrates a schematic flowchart for the method according to the invention as depicted in Fig. 3.

Common reference numerals are used throughout the figures to indicate similar features. The figures illustrate the invention according to the invention for verification of unbalanced oil-and-vinegar signatures with an embodiment focusing particularly on MAYO signatures. This method addresses the growing need for post-quantum cryptographic solutions, especially in the context of efficient signature verification on embedded devices.

The depicted embodiment specifically addresses the unique characteristics of oil-and-vinegar signatures such as MAYO signatures. The method employs techniques to minimize RAM usage during the verification process.

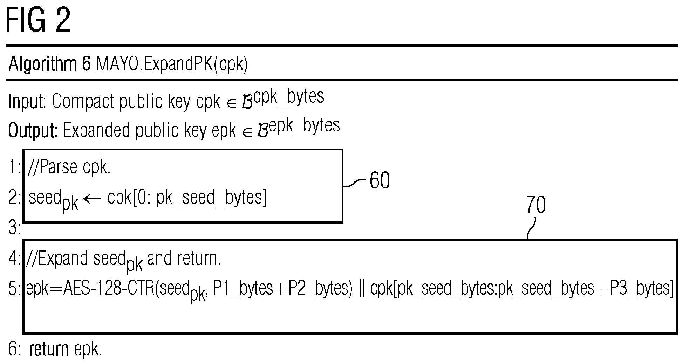

The method for verification of a signature involves accepting a compressed public key as a verification key. The compressed public key contains information necessary for signature verification in a compact form. Fig. 2 illustrates the process of expanding a compressed public key.

The expansion process begins with a decoding seed 60. A seed is extracted from the compressed public key cpk, which serves as the basis for generating the expanded key epk. Following the seed extraction, an expanding compressed key 70 step is performed. This step utilizes the AES-128-CTR (Advanced Encryption Standard in Counter Mode) algorithm to expand the compressed key into a full, expanded public key epk.

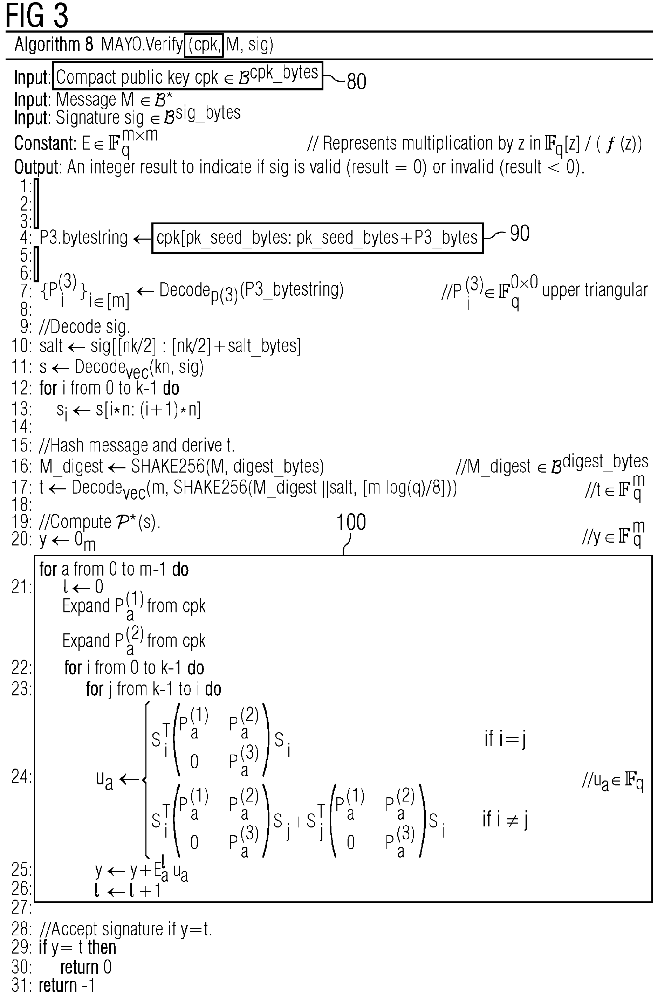

The AES-128-CTR expansion method allows for selective decompression of key parts as will be explained in more detail with Fig. 3. Instead of decompressing the entire public key at once, the method allows for extracting a strictly smaller part of the compressed public key cpk, representing set of coefficients as needed during the verification process.

The expansion process involves encrypting an increasing 128-bit wide counter with AES-128 under the key derived from the seed. This process continues until the required number of bytes for the expanded key components have been produced. The expanded key components typically include matrices, which are used in the signature verification calculations.

By utilizing the AES-128-CTR expansion method, the verification process can be implemented such that it decompresses only one matrix at a time. This approach significantly reduces the memory requirements for storing the expanded public key epk, as only the portion of the key needed for immediate calculations is held in memory at any given time.

The ability to selectively decompress parts of the compressed public key cpk allows for efficient memory usage and particularly small RAM demands during the verification process.

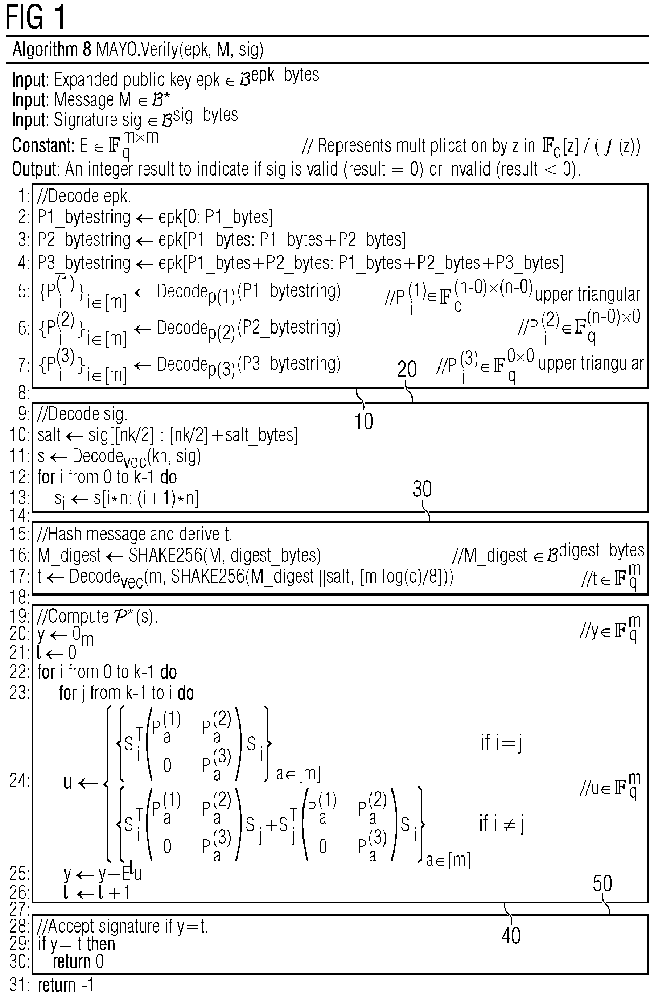

The standard MAYO signature verification process as known from prior art involves several steps, as illustrated in Fig. 1. The process begins with a step of decoding coefficients 10, which involves extracting and processing the necessary coefficients from the expanded public key epk. Following this, the process moves to a step of decoding signature 20, where the received signature is decoded into a format suitable for verification.

The next step in the process involves hashing message and deriving verification condition 30. In this step, the message associated with the signature is hashed using the SHAKE256 algorithm. The resulting digest is then used, along with a salt value, to derive a verification target t. This verification target serves as a condition that the signature must satisfy to be considered valid.

The core of the verification process involves evaluating a set of quadratic equations with evaluation step 40. The set of quadratic equations involves coefficients that are encoded in the above-mentioned matrices. This evaluation step 40 utilizes these coefficients to compute a result based on the set of quadratic equations. The verification condition comprises a plurality of separately verifiable subconditions, each represented by an equation of the set of quadratic equations. These equations collectively form the verification condition that the signature must satisfy.

The final step in the process is verifying the verification condition 50. In this step, the result computed from the quadratic equations is compared against the derived verification target t. If the computed result matches the verification target t, the signature is considered valid. Otherwise, the signature is deemed invalid.

The verification condition, comprising the set of quadratic equations, allows for a systematic and memory saving approach to signature verification. By breaking down the verification into separately verifiable subconditions, the algorithm can efficiently process and validate the signature with less memory demands while maintaining the security properties of the MAYO signature scheme.

In the following, we will describe the modification of the above-described method for signature verification as known from prior art by breaking down the verification into separately verifiable subconditions, that do not require keeping the decompressed key fully in memory at a given time.

Fig. 3 provides a more detailed view of the respective modifications of the method according to the invention, that selectively decompresses strictly smaller parts of the compressed public key cpk.

In the method according to the invention, the MAYO signature verification algorithm begins with the step 80 of receiving the compressed public key cpk, which again contains the necessary information for signature verification in a compact form. The compressed key includes a seed and additional data required for expanding the key like described above.

After receiving the compressed key, the algorithm proceeds to extracting a set of coefficients 90. This step involves decoding the compressed key to obtain some of the required matrices, which are essential for the verification process.

During the evaluation of the quadratic equation, the algorithm performs repeatedly extracting a strictly smaller set of coefficients 100 at a time. This step involves repeatedly and selectively expanding portions of the compressed key cpk as needed for a respective fraction of the set of quadratic equations, rather than expanding the entire compressed public key cpk at once. This approach allows for efficient memory usage during the verification process.

In the modified version of signature verification, i. e. in the depicted embodiment of the method according to the invention, only a strictly smaller part of the compressed public key cpk is decompressed and stored in memory at a time. Only this strictly smaller part is then used for verifying the respective subset of the set of quadratic equations and kept in memory. The full information in the compressed public key cpk is used by looping the decompression of the compressed public key. For each run of the loop, a different strictly smaller part of the compressed public key is decompressed and kept im memory and a different subset of the set of quadratic equations is verified. After all runs of the loop are completed, the full set of quadratic equations is verified, so that the full signature is verified.

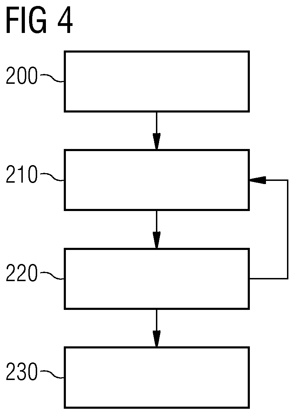

The compact implementation of MAYO signature verification addresses the challenge of efficient signature verification on devices with limited RAM. Fig. 4 illustrates the key steps of this compact implementation.

The process begins with a step 200 of receiving the compressed public key cpk. In this step 200, the verification algorithm accepts a compressed public key cpk as input. The compressed public key cpk contains all the necessary information for signature verification in a compact form.

Following the receipt of the compressed public key cpk, the algorithm proceeds to a step 210 of extracting a strictly smaller set of coefficients. This step 210 involves selectively decompressing only a strictly smaller portion of the compressed public key cpk at a time. The uncompressed part of the compressed public key cpk denotes matrices involved in the verification condition, i. e. the set of quadratic equations. Specifically, the algorithm decompresses only a subset of matrices at a time. Only this subset of matrices is kept in memory at a time.

The next step in the process is a step 220 of verifying a part of the verification condition. In this step 220, the algorithm uses the uncompressed part of the compressed public key cpk to verify a part of the verification condition. The verification condition comprises a set of equations that the signature must satisfy to be considered valid. By verifying parts of the condition using only the currently decompressed matrices, the algorithm can process the verification in smaller, memory-efficient steps.

The process of extracting coefficients and verifying part of the condition may be repeated iteratively. This is represented by the arrow leading back from the step 220 of verifying a part of the verification condition to the step 210 of extracting a strictly smaller set of coefficients. This iterative approach allows the algorithm to process the entire verification condition while maintaining a small memory footprint.

The final step in the process is a step 230 of verifying the full verification condition. This step involves completing the verification process by checking if all parts of the verification condition have been satisfied.

Throughout the verification process, the embodiment of the method according to the invention limits, at a time, repeatedly decompression of the compressed public key cpk to a strictly smaller part of the compressed public key cpk into an uncompressed part of the key. This approach allows the algorithm to work with a much smaller amount of RAM compared to a standard implementation that would require decompressing and storing the entire public key.

In the compact implementation, the step of evaluating quadratic equation is modified to use subsets of the full set of quadratic equations. This modification of the method according to the invention as compared to the method known from prior art allows to process the verification calculations efficiently while working with the selectively decompressed portions of the public key only.

By interleaving the decompression of the public key with the verification steps, the compact implementation achieves significant reduction in RAM usage while maintaining the security properties of the MAYO signature scheme. This approach enables the use of MAYO signatures on a wider range of devices, including those with constrained resources.

This reduction in RAM usage enables the use of MAYO signatures on a wider range of devices, including small embedded systems and industrial edge devices. For example, the compact implementation allows for the verification of MAYO signatures on devices that may not have sufficient RAM to store the fully expanded public key, which can be several hundred kilobytes in size for certain parameter sets.

One notable application of this compact method according to the invention is in the verification of firmware updates for embedded devices. Many embedded systems use long-living root-of-trust public keys for verifying firmware updates, and these keys are often difficult or impossible to replace. The compact implementation allows for the use of post-quantum secure MAYO signatures in these scenarios, even on legacy devices that were not originally designed with sufficient RAM to process standard MAYO signatures.

It is understood that the ideas presented in this compact implementation can be transferred to other unbalanced oil-and-vinegar based signature schemes in a straightforward manner. This extensibility suggests that the method has broader applications beyond MAYO signatures and common to all oil-and-vinegar based signatures.

A computer-program product, not explicitly depicted in the figures, is configured to carry out the method for verification of a signature, including the steps of receiving a compressed key, extracting strictly smaller sets of coefficients, and verifying parts of the verification condition. This computer-program product encapsulates the logic for the compact implementation, allowing for easy deployment across various devices and platforms.

According to further embodiments, devices in the form of industrial edge devices, are configured to carry out the method or comprise a computer-program product implementing the method. This configuration enables these devices to perform post-quantum secure signature verification with minimal additional hardware requirements, hence extending the useful life of existing devices in the face of emerging quantum computing threats.

In summary, the compact implementation of oil-and-vinegar signatures such as the MAYO signature verification addresses the challenge of implementing post-quantum cryptography on constrained devices. By reducing RAM requirements, the method enables the use of robust post-quantum cryptographic techniques in a wider range of applications and devices.

## Claims

1. Method for verification of a signature, which comprises an unbalanced oil-and-vinegar signature, comprising the steps of accepting a compressed public key as a verification key (200), limiting, at a time, repeatedly decompression of the compressed public key to a strictly smaller part of the compressed public key into an uncompressed part of the key (210), using the uncompressed part of the key for verifying a part of the verification condition (220), and continuing until the verification condition is fully verified (230).

2. Method according to one of the previous claims, wherein the part of the uncompressed part of the key denotes matrices involved in the verification condition (90, 100).

3. Method according to one of the previous claims, wherein the verification condition comprises a set of equations (100).

4. Method according to one of the previous claims, wherein the verification condition comprises two or more separately verifiable subconditions (40, 100).

5. Method according to one of the previous claims, wherein the subconditions are equations (100).

6. Method according to one of the previous claims, wherein the oil-and-vinegar signature is a MAYO signature (80).

7. Method according to one of the previous claims, which is computer-implemented (70).

8. Method according to one of the previous claims, which is carried out with a device, particularly with an industrial edge device (200, 210, 220, 230).

9. Computer-program product, which is configured to carry out a method (200, 210, 220, 230) according to one of the previous claims.

10. Device, particularly industrial edge device, that is configured to carry out the method (200, 210, 220, 230) according to one of the claims 1 to 8 and/or which comprises a computer-program product according to claim 9 (200, 210, 220, 230).
